# EUROPEAN PATENT APPLICATION

(11) **EP 4 193 871 A1**
(43) Date of publication of application: **14.06.2023**
(21) Application number: 22212566.8
(22) Date of filing: 09.12.2022
(51) Int. Cl.: A43B 23/02, B32B 1/00

(54) **REINFORCED SHOE UPPER, REINFORCEMENT ELEMENT FOR A SHOE UPPER AND METHOD FOR FORMING A REINFORCED SHOE UPPER**

(30) Priority: 13.12.2021 IT 202100031187
(71) Applicant: ALC Tecnologie Adesive S.r.l., 10123 Torino (IT)
(72) Inventor: VICENTINI, Edoardo, 10123 TORINO (IT)
(74) Representative: Studio Torta S.p.A.

(57) **Abstract**

A reinforced shoe upper (2) for a footwear (1) has an outer layer (5), an inner layer (6) which at least partially lines the outer layer (5), at least one reinforcement layer (9) interposed between the outer layer (5) and the inner layer (6), and a gluing material interposed between the reinforcement layer (9) and the outer (5) and inner (6) layers; the shoe upper (2) is reinforced using a reinforcement element (20) provided with the reinforcement layer (9) and with a plurality of solid gluing material portions (13), which protrude on opposite sides of the reinforcement layer (9), are spaced apart from one another, delimit between one another breathable zones (16,21) without gluing material and are protected by protection films (18,19) which are removed before forcing the outer layer (5) and the inner layer (6) against the gluing material.

## Description

### CROSS-REFERENCE TO RELATED APPLICATIONS

This patent application claims priority from Italian patent application no. 102021000031187 filed on December 13, 2021, the entire disclosure of which is incorporated herein by reference.

### TECHNICAL FIELD

The present invention relates to a reinforced shoe upper.

### BACKGROUND

As is known, in order to manufacture a footwear, it is known to separately form a shoe upper and a mounting insole and thus to firmly connect to one another, generally by means of gluing or sewing, a peripheral portion of the shoe upper to the insole by bending and modelling the shoe upper until giving it the desired shape. The insole is then firmly connected to the sole by means of gluing.

Alternatively, the reinforced shoe upper, after being shaped is partially embedded in the sole simultaneously with an injection of the same.

In both cases, the shaping of the shoe upper is a delicate process which requires experience and particular attention in order to prevent wrinkles, swellings or depressions from being created on the shoe upper which would compromise the aesthetic value thereof, besides the duration and the comfort of use.

As is further known, the modelling process of the shoe upper is strongly influenced by the quality and especially by the greater or lesser capability of the shoe upper to be modelled and shaped. In most applications, in fact, the shoe upper is a "layered" component, i.e. composed of an outer layer made of valuable material, of an inner layer or lining and of one or more reinforcement layers, which are obtained by layer-cutting a material along a predefined profile depending on the type of footwear, are inserted between the outer layer and the lining and are firmly fixed to both the outer layer and the lining.

To date, the need is increasingly felt to manufacture shoes having, simultaneously with the indispensable aesthetic value, a pleasant tactile feeling of softness and natural consistency and a high breathability.

The breathability is easily obtainable in the zones without reinforcement by choosing materials suitably breathable for manufacturing the outer layer and the lining, but it is strongly compromised and, generally, annulled in the zones where the reinforcement layers are provided.

The foregoing essentially derives from the mode in which the reinforced portions are manufactured and, in particular, the way in which the reinforcement layers are applied or fixed to the outer layer and to the lining.

Generally, each one of the reinforced zones is obtained by spreading the corresponding part of the lining on a flat surface, depositing on the lining a homogeneous layer of liquid gluing material, normally sprayed by means of nozzles of a liquid gluing feeding plant. Once the spraying is completed, the reinforcement layer is rested on the sprayed zone and adhered to the lining, then, still by means of the nozzles, on the reinforcement layer and on the lining in the surrounding of the reinforcement layer a second layer of gluing material is deposited and thus the outer layer is placed on top of the reinforcement layer and of the lining and it is all pressed by means of a preform press.

During the pressing, the gluing material inevitably flows between the outer layer and the reinforcement layer and between the reinforcement layer and the lining and inserts in the porosity of the outer layer, of the lining and of the reinforcement layer creating, in actual fact, a continuous barrier which, in actual fact, makes waterproof not only the reinforced portion but also an annular portion of the outer and inner layers surrounding the reinforcement layer.

In addition, as soon as the gluing material is crystallized, the reinforced portion and the annular portion oppose a greater resistance to the deformation with respect to the remaining part of the shoe upper and this hinders the following modelling and makes it more laborious. It follows that, in order to obtain the desired modelling, the reinforced portion and the annular portion have to be modelled immediately after the pressing.

The use of liquid glues, for example water-based, is responsible for hardenings caused by the crystallization of the liquid glues which substantially modify the natural "Hand" of external leathers/fabrics and complicate the fixing of the reinforcement layer hindering the rise in the production rate, since they require a relatively long drying time of the gluing material.

In the presence of outer layers or of linings having high porosity, such as for example materials made of natural or synthetic fabric, the quantity of gluing material has to be accurately dosed so as to prevent it from migrating towards the outside staining the outer layer or causing the latter to have an uneven or spotted aspect.

In all cases, the spraying of liquid gluing materials entails the inevitable forming of vapours or mists and, in general, of volatile substances, hence during the forming the personnel in charge is obliged to wear protective masks, despite the spraying plants of the glue are provided with suction units.

### SUMMARY

The object of the present invention is to manufacture a reinforced shoe upper, whose manufacturing features allow solving in a simple and cost-effective manner the above-described problems.

According to the present invention, a reinforced shoe upper is provided, as defined in claim 1.

The present invention further relates to a reinforcement element of a shoe upper, as defined in claim 7.

The present invention finally relates to a method for manufacturing a reinforced shoe upper, as defined in claim 10.

### BRIEF DESCRIPTION OF THE DRAWINGS

The invention will now be described with reference to the accompanying drawings, which illustrate a non-limiting example embodiment thereof, wherein:
Figure 1 is a perspective view of a footwear having a reinforced shoe upper manufactured according to the teachings of the present invention;
Figure 2 is an exploded perspective view, with parts removed for clarity, of the footwear of Figure 1;
Figure 3 is an exploded perspective view of the shoe upper of the footwear of Figure 1 arranged in a first assembling condition;
Figure 4 is a section, on an enlarged scale, according to line IV-IV of Figure 3;
Figure 5 is a figure similar to Figure 3 and illustrates the shoe upper in a different assembling condition;
Figure 6 illustrates the shoe upper of Figures 3 and 4 in a pressing condition; and
Figure 7 is a section, on an enlarged scale, according to line VII-VII of Figure 6.

### DESCRIPTION OF EMBODIMENTS

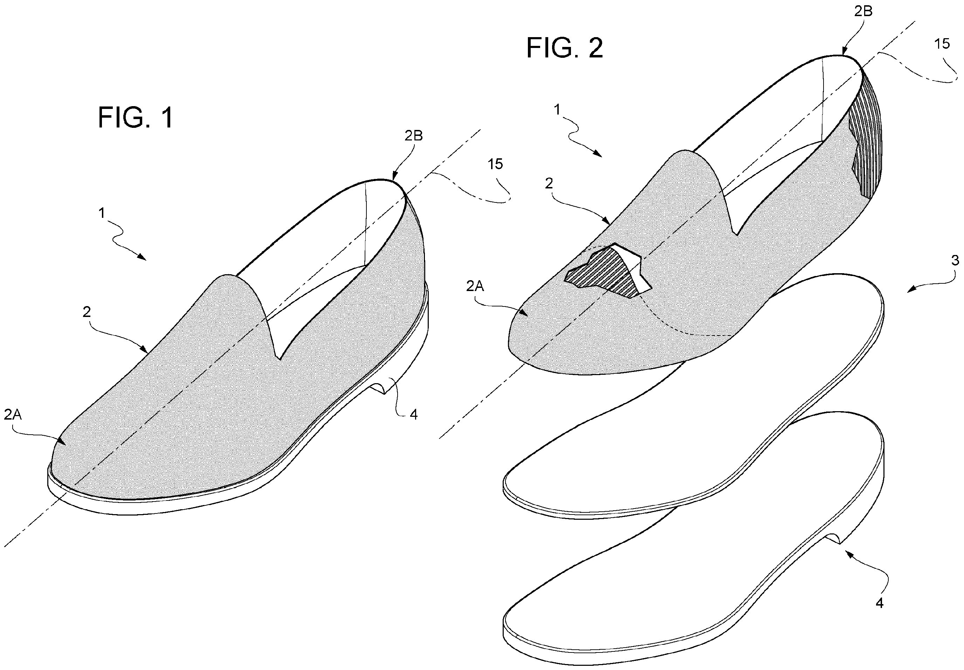

In Figures 1 and 2, reference numeral 1 indicates, generically and as a whole, a breathable footwear.

The footwear 1 comprises a reinforced shoe upper 2, a forming insole 3, to which the shoe upper 2 is firmly connected by means of sewing or gluing and a sole 4.

According to a variation not illustrated, the footwear 1 is without the insole 3 and the reinforced shoe upper 2 is firmly connected to the sole 4 through an injection moulding process of the sole 4.

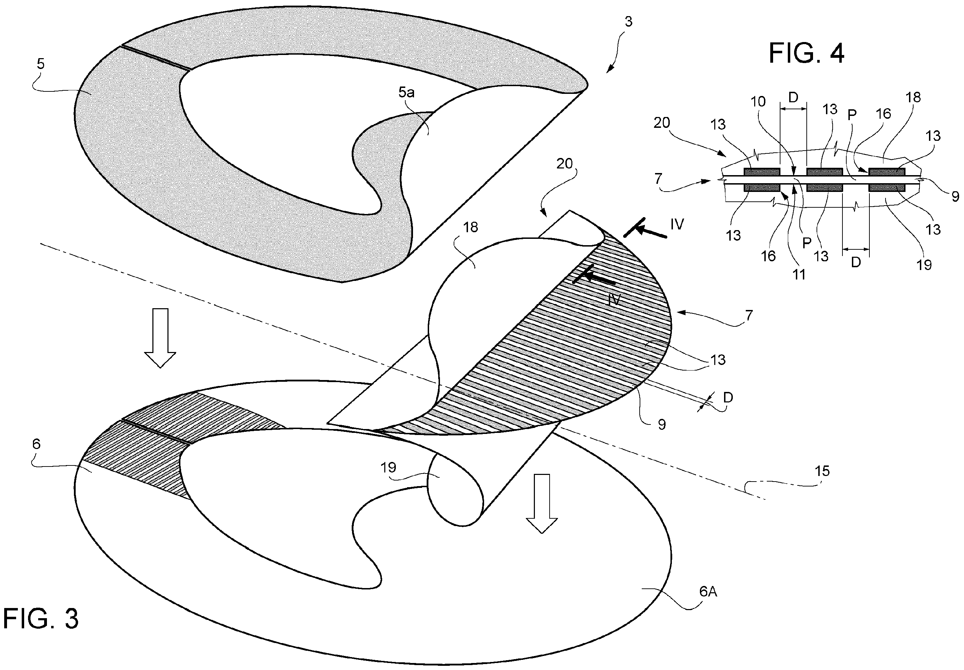

Regardless of how the shoe upper 2 is connected to the sole 3 and with reference to Figures 3, 5 and 6, the reinforced shoe upper 2 comprises an outer layer 5 made of breathable material, for example, leather or fabric, an inner layer 6 or lining of at least partial covering of the outer layer 5 and it too made of breathable material and a reinforced body or toe cap 7 interposed between the outer layer 5 and the inner layer 6.

With reference to Figure 4, the reinforced body 7 comprises a shaped layer 9 made of breathable material, which is delimited by two extended and opposed surfaces 10 and 11 and has a peripheral edge which is shaped depending on the type and on the conformation of the footwear 1 to be manufactured.

The reinforced body 7 further comprises a plurality of solid gluing material portions 13 integrally connected to the respective surfaces 10 and 11 and protruding cantilevered from the surfaces 10 and 11 in opposed directions.

The gluing material belongs to the family of the PSA (Pressure Sensitive Adhesives) glues, in the form of adhesive tape, without solvents and emulsions, having 100% of solid adhesive material.

Conveniently, and as is visible in Figure 4, each gluing material portion 13 of one of the surfaces 10,11 extends, at least partially, in the area of a portion 13 of the other surface 10,11.

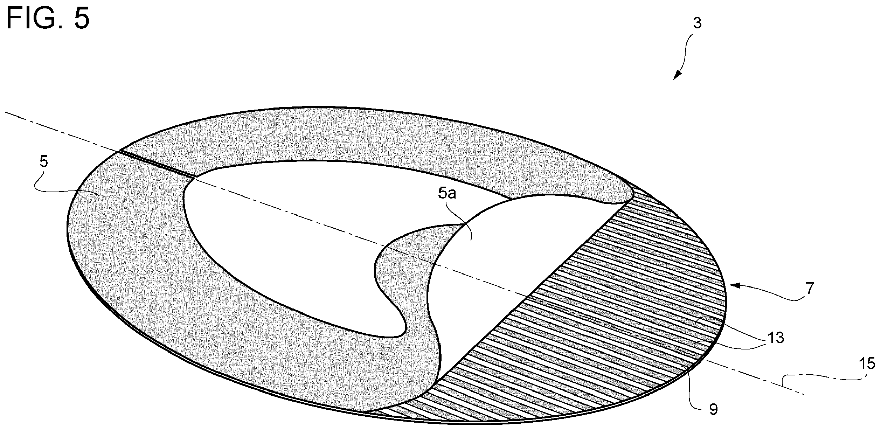

With reference to Figures 3 and 5, each portion 13 is an elongated portion defined by a solid adhesive material bead.

Still in the described example, when the reinforced body 7 is in its undeformed condition, still illustrated in Figures from 3 to 5, the beads are straight and parallel to one another and to a longitudinal direction 15 extending between a tip 2A and a heel 2B of the shoe upper 2.

With reference to Figure 4, the beads arranged on both surfaces 10 and 11 are arranged at a same distance D from one another and consequently delimit, between one another, respective breathable channels 16 since they are without gluing material, i.e. intermediate zones or portions P (Figure 4) of the layer 9 having unvaried breathability with respect to that of the starting layer 9, i.e. without adhesive material.

Alternatively, the beads on one of the surfaces, for example the surface 10, are arranged at a distance from one another different from the distance between two beads of the other surface, in the specific case the surface 12. The two distances are not anyway arbitrary, but have to be chosen so that the reinforcement layer has breathable portions, i.e. freely crossable by at least an aeriform flow without the latter being hindered or blocked by the one or the other adhesive material portion, this so as to ensure, regardless of the distribution, the breathability.

According to a variation not illustrated, the beads are discontinuous and comprise several elongated portions not necessarily straight and aligned with one another and delimiting, between one another, respective further breathable zones.

According to a further variation, the beads are always continuous but not straight and, for example, comprising curved portions alternated or not with straight portions or with curved portions with different curvature.

According to a last variation, the gluing material is spot-divided and the reinforced body 7 thus has a plurality of portions, for example, cylindrical or frusto-conical all having the same height and arranged spaced apart from one another.

In all cases, the gluing material portions 13 on one of the faces 10,11 are spaced apart from one another and are arranged at least partially in positions that are superimposed to the corresponding portions on the other surface 10,11, so as to have portions of the layer 9 without gluing material on both their opposite surfaces 10 and 11, so as to form a predefined mesh of breathable zones.

In general, the geometry and/or the distribution of the gluing material portions 13 on the extended surfaces 10 and 11 is chosen during the design step depending on the material composing the layers 5,6 and 9 so as to ensure a desired breathability of the footwear and depending on the modelling required for easing the modelling of the reinforced shoe upper 2 upon the varying of the position of the reinforcement and of the type of footwear, as it will be clear from the following.

In all cases, the gluing material portions 13 are protected by respective removable films 18 and 19 (Figures 3 and 4), which define together with the layer 9 and with the gluing material portions 13 part of a reinforcement element 20 which is independent and easily manipulable and storable both in the form of single layers, and in rolls should the films 18 and 19 be in the form of strips.

In any case, each film 18 and 19 has its own surface arranged in contact with the relative gluing material portions 13 which has an adhesiveness to the gluing material less than the adhesiveness of the gluing material to the layer 9. In this manner, during the removal of the protection films 18,19, the gluing material remains firmly connected to the reinforcement layer 9, as it will be evident from the following.

The reinforced shoe upper 2 is manufactured in the following manner.

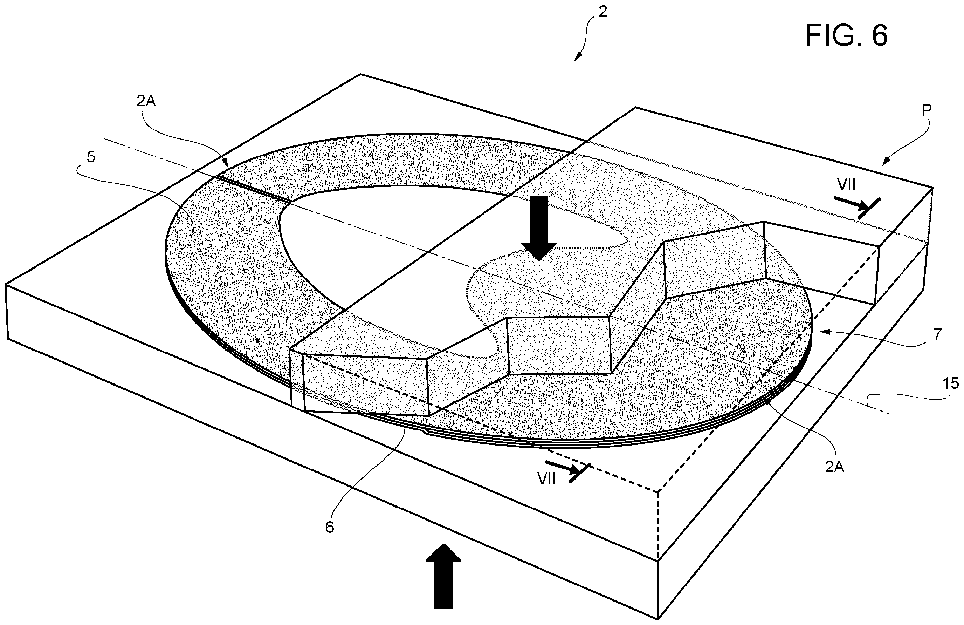

The outer layer 5 is placed on top of the inner layer 6 and, when provided, firmly connected to the inner layer 6 in a manner known per se leaving the parts 5A and 6A of the layers 5 and 6 free, in the specific case the ones in the area of the tip 2A (Figure 6).

In parallel, a reinforcement element 20 is collected, the protection films 18 and 19 are removed one after the other leaving the gluing material portions 13 uncovered bringing, in such manner, the reinforced body 7 in a ready-to-use condition.

The reinforced body 7, at this point, is inserted between the two portions 5A and 6A, is positioned and thus by means of a press P, schematized in Figure 6, the two portions 5A and 6A are forced towards one another and against the reinforced body 7.

Alternatively, only one of the films 18,19 is removed before the insertion of the reinforcement layer 9 between the portions 5A and 6A, whereas the other film is removed after the positioning of the reinforcement layer 9.

In any case, preferably, the pressing is carried out at room temperature and in complete absence of fluid materials for activating the gluing material, i.e. under dry conditions.

The pressing force is accurately determined depending on the materials composing the layers 5,6 and 9 and depending on the physical chemical characteristics of the gluing material.

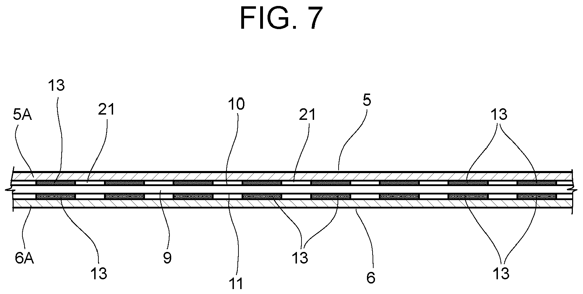

In particular, the pressing force is determined so that, once the pressing is completed, between the gluing material portions 13 breathable zones or spaces 21 (Figure 7) remain uncovered, i.e. without gluing material, i.e. so as to preserve the natural breathability of the layers 5, 6 and 9.

Experimentally it was possible to note that by using gluing materials of the type indicated above and layers made of leather or fabric, a pressure between 0.2 and 2 N/mm² is sufficient for firmly connecting to one another layers 5, 6 and 9 and for simultaneously limiting the deformation of the gluing material portions 13 and creating the above-defined distribution of the gluing material between the layer 5 and the layer 9 and between the layer 9 and the layer 6 obtaining a breathability between 60% and 90% of the breathability in the absence of gluing material.

Based on the foregoing, it is evident that the arrangement of the solid material on the reinforcement layer 9 allows, first of all, simultaneously inserting, i.e. in a single operation, the reinforcement layer 9 and the gluing material between the portions 5A and 6A.

With respect to the known manufacturing mode, on the one hand, this sensibly quickens the production process since the gluing of the layers 5, 6 and 9 to one another is immediate and does not require a reticulation time of the glue and, on the other hand, solves all the problems deriving from the gluing with liquid glues or with glues having high fluidity.

Specifically, the use of a solid glue carried by the reinforcement layer 9 allows enormously simplifying the forming plant of the footwear 1, which no longer requires the entire plant provided to spray, drying and suck the fumes emitted both by the gluing material and the liquids or aeriform substances needed according to the prior art for the activation of the known gluing materials.

For this reason, the provided forming plants have extremely contained costs and bulks requiring, in practice, only the press P and the work environment is extremely healthier and more comfortable despite the absence of suction hoods.

In addition, the portion of the shoe upper provided with the reinforced body 7 is, first of all, breathable exactly due to the presence of zones 21 or portions without gluing material but also easily conformable also after a relatively long time after the pressing, since the gluing material keeps part of its elasticity and the zones left free from the gluing material behave as virtual hinges.

Simultaneously, the mesh of gluing material ensures a uniform gluing that prevents the forming of wrinkles, folds, depressions or indents or stiffened zones.

The reinforced zone of the shoe upper 2 thus still has a high aesthetic value and a sensibility to the touch which are comparable, if not identical, to those of the other zones of the shoe upper and this allows manufacturing quality footwear.

The solid adhesive material having a reduced capacity of deforming under load, i.e. being highly cohesive, allows reinforcing the traditional shoe uppers but, especially, allows reinforcing in a breathable manner the shoe uppers with high porosity, such as for example the shoe uppers made of fabric or of equivalent synthetic material. In fact, the gluing material carried by the layer 9 is practically insensible to the porosity of the materials hence it does not stain the outer layer 5 and thus the shoe upper has a uniform aspect.

Based on the foregoing, it is then evident that the reinforcement mode of the footwear 1 in the area of the tip 2A can be used for the reinforcement of other portions of the shoe upper 2 and, in particular, of the zone arranged in the area of the heel 2B (Figure 2) or of intermediate zones between the tip 2A and the heel 2B still manufacturing zones with high breathability and shape consistency. In these latter cases, the direction of the gluing material beads, if provided and, in general, the arrangement of the portions 13 of gluing material, will be chosen so that the mentioned virtual hinges and, in general, the portions without gluing material are arranged so as to ease the necessary conformation of the part involved.

Based on the foregoing, it is finally evident that regardless of the footwear to be manufactured, the geometry of the portions of gluing material and the distribution of the gluing material can be chosen in such a way to manufacture zones or portions having a breathability or a shape stability different from those of other zones.

Lastly, it is evident that the described reinforcement mode can be applied to any footwear be it elegant, sporty or such to have a high comfort for the foot.

To finish, it is evident that adhesive material portions geometrically different from one another can be provided on the same surface of the reinforcement layer so as to manufacture, for example, portions of the shoe upper having different resistance or breathability.

## Claims

1. A reinforced shoe upper; the shoe upper comprising
- an outer layer (5),
- an inner layer (6) which at least partially lines said outer layer (5),
- at least one reinforcement layer (9) interposed between the outer layer (5) and the inner layer (6), and
- a gluing material interposed between the outer layer (5) and the reinforcement layer (9) and between the reinforcement layer (9) and the inner layer (6),
said outer, inner and reinforcement layers being made of a breathable material;
**characterized in that** said gluing material is a solid adhesive material and, on each one of the opposite surfaces (10,11) of the reinforcement layer (9), is divided into gluing material portions (13) spaced apart from one another; the portions (13) on one of the surfaces (10,11) of the reinforcement layer (9) being arranged, at least partially, in the areas of the gluing material portions (13) on the other surface (10,11) of the reinforcement layer (9), so as to delimit breathable portions (21) of the reinforcement layer (9) without gluing material.

2. The shoe upper according to claim 1, **characterized in that** at least some of said gluing material portions are continuous elongated portions.

3. The shoe upper according to claim 2, **characterized in that** said elongated portions extend along substantially parallel paths.

4. The shoe upper according to claim 2 or 3, **characterized in that** at least some of said elongated portions extend in straight directions, which are substantially parallel to a longitudinal direction extending between a heel and a tip of the shoe upper.

5. The shoe upper according to one of the claims from 2 to 4, **characterized in that** at least some of said elongated portions are gluing material beads having widths that are substantially constant along their entire length.

6. The shoe upper according to any one of the preceding claims, **characterized in that** said gluing material belongs to the family of the PSA (Pressure Sensitive Adhesives) glues having 100% of solid adhesive material.

7. A reinforcement element for a shoe upper, the reinforcement element comprising a shaped support layer (9) having two opposed surfaces (10,11), said support layer (9) being a breathable material layer, **characterized by** comprising, for each one of said surfaces (10,11), a plurality of solid gluing material portions (13), which are spaced apart from one another and delimit, between one another, breathable zones (16) without gluing material, each breathable zone (16) of one of said surfaces (10,11) being at least partly arranged in the area of a breathable zone (16) of the other one of said surfaces (10,11), so as to delimit a breathable portion (P) of said support layer (9), and by comprising, for each one of said surfaces (10,11), a respective film (18,19) protecting the corresponding said solid gluing material portions (13), each one of said films (18,19) being glued to the relative gluing material portions (13) in a removable manner.

8. The reinforcement element according to claim 7, **characterized in that** at least part of said gluing material portions are strips next to one another and delimiting, between one another, breathable channels without gluing material.

9. The reinforcement element according to claim 7 or 8, **characterized in that** said reinforcement layer is shaped so as to define an adhesive reinforced toe cap or heel counter for the shoe upper.

10. A method for manufacturing a reinforced shoe upper as claimed in claim 1, the method comprising the steps of
- placing an outer layer (5) on top of an inner layer (6) for lining said outer layer (5),
- inserting at least one reinforcement layer (9) between said outer layer (5) and said inner layer (6),
- placing a gluing material between the reinforcement layer (9) and the outer layer (5) and between the reinforcement layer (9) and the inner layer (6), and
- causing the reinforcement layer (9) to adhere to the outer layer (5) and to the inner layer (6),
**characterized in that** said gluing material is composed of solid gluing material portions (13) carried by opposite surfaces (10,11) of said reinforcement layer (9), hence the step of placing the gluing material is carried out simultaneously with the step of inserting the reinforcement layer (9) between the outer layer (5) and the inner layer; wherein, on each one of the surfaces (10,11) of the reinforcement layer (9), the solid gluing material portions (13) are spaced apart from one another;
and wherein the adhesion of the reinforcement layer (9) to the outer layer (5) and to the inner layer (6) comprises the step of forcing the outer layer (5) and the inner layer (6) towards one another and deforming the solid gluing material portions (13), so that said solid gluing material portions (13) are still spaced apart from one another once the pressing is completed and thus breathable portions (21) of the reinforcement layer (9), of the outer layer (5) and of the inner layer (6) are left without gluing material.

11. The method according to claim 10, wherein during the forcing and deformation step a pressure between 0.2 and 2 N/mm² is applied.

12. The method according to claim 10 or 11, **characterized in that** said adhesion is carried out keeping the outer layer and the inner layer at room temperature.

13. The method according to any one of the claims from 10 to 12, **characterized in that** said adhesion is carried out under dry conditions.

14. The method according to claim 10, **characterized in that** the simultaneous insertion of the reinforcement layer (9) and of the gluing material is carried out using a reinforcement element as claimed in claim 7, after having removed at least one of the films (18,19) protecting the gluing material.
